# EUROPEAN PATENT SPECIFICATION

(11) **EP 3 648 009 B1**
(45) Date of publication and mention of the grant of the patent: **18.08.2021**
(21) Application number: 19206868.2
(22) Date of filing: 04.11.2019
(51) Int. Cl.: G06K 19/07, G06K 7/10

(54) **RFID DEVICE FOR MONITORING THE RIPENESS DEGREE OF FRUIT, PROCESS AND CONTAINER USING SAID DEVICE**
RFID-VORRICHTUNG ZUR ÜBERWACHUNG DES REIFEGRADES VON OBST, VERFAHREN UND DIE VORRICHTUNG VERWENDENDER BEHÄLTER
DISPOSITIF RFID POUR SURVEILLER LE DEGRÉ DE MATURATION D'UN FRUIT, PROCÉDÉ ET RÉCIPIENT UTILISANT CE DISPOSITIF

(30) Priority: 05.11.2018 IT 201800010038
(43) Date of publication of application: 06.05.2020
(73) Proprietor: ILIP S.r.l., 40053 Valsamoggia (BO) (IT)
(72) Inventor: GARAVAGLIA, Luigi, 40053 Valsamoggia (BO) (IT); BIGNAMI, Filippo, 40053 Valsamoggia (BO) (IT); MARROCCO, Gaetano, 00133 Roma (IT); OCCHIUZZI, Cecilia, 00133 Roma (IT); D'UVA, Nicola, 00133 Roma (IT)
(74) Representative: Zambardino, Umberto

(56) References cited:
- US-A1- 2018 089 475
- FORMISANO FABRIZIO ET AL: "Auxiliary smart gas sensor prototype plugged in a rfid active tag for ripening evaluation", 2015 XVIII AISEM ANNUAL CONFERENCE, IEEE, 3 February 2015 (2015-02-03), pages 1-4, XP032751410, DOI: 10.1109/AISEM.2015.7066800
- JOSEPH M. AZZARELLI ET AL: "Wireless gas detection with a smartphone via rf communication", PNAS, vol. 111, no. 51, 8 December 2014 (2014-12-08), pages 18162-18166, XP055385055, US ISSN: 0027-8424, DOI: 10.1073/pnas.1415403111

## Description

### Field of application

In its more general aspect, the present invention relates to the fruit and vegetable technical field.

In particular, the present invention relates to an RFID device for monitoring the ripeness degree of fruit, in particular of tropical fruit, the RFID device comprising an RFID label operating in UHF band and a wireless reader associated therewith.

The present invention also relates to a process for monitoring the ripeness degree of fruit using an RFID device as above.

The present invention further relates to a system for monitoring the ripeness degree of fruit, the system comprising a food container or package and of an RFID device of the above type.

### Prior art

Radio frequency identification devices (RFID) are widely used to identify and track objects. These devices essentially have as fundamental elements: 1) an RFID label, commonly called RFID tag or transponder, having a microchip that contains data in a memory and a unique identification code, an antenna and a physical support, also called substrate, whereon the microchip and the antenna are mounted, 2) a reader for the radio frequency reading (RF) of data transmitted by the RFID label and possible writing of data in the RFID label.

The RFID label may be active or passive. The passive RFID label is capable of only transmitting data when a reader, generating an appropriate RF signal, is passed over it. Said signal is received by the antenna of the RFID label and transformed through the principle of induction into electrical energy that feeds the microchip. Therefore, the microchip thus active transmits, through the antenna, a signal to the reader containing the information stored in the microchip and possibly receives the updating of the data in the memory of the microchip from the reader (for instance if the microchip is provided with a writable memory).

Instead, the active RFID label is provided with a battery so that it can operate autonomously and namely transmit the information contained in the microchip without the need for activation by the reader.

The RFID label may also be combined with a sensor for detecting specific parameters of the environment of use such as temperature, humidity, presence of specific chemicals, etc.

The RFID labels may be made in endless formats. They may be directly attached to the surface of the associated object, for instance through adhesives, fixing systems of plastic material, etc., or may be used close to the associated object. For instance, in case of food products, the RFID labels may be fixed on the container or package containing the food product to be tracked.

Compared to other conventional identification systems (for instance barcodes and magnetic band readers), the RFID technology offers undoubted advantages in terms of speed of reading and moreover the optical visibility of the label by the RF reader is not required.

In light of the above advantages, there is currently a constant search for solutions which allow using the RFID technology, amongst the other, in food monitoring, in particular for monitoring the ripeness degree of fruits, so as to have a constant control throughout the distribution chain.

In this regard, RFID devices have been conceived in which the RFID label directly or indirectly associated with food (for instance with the container/package) is provided with one or more sensors for detecting parameters that can be correlated to the quality of food, such as for instance the presence and/or quantification of specific organic substances such as ethylene, temperature, humidity, etc.

However, said RFID devices are mostly not satisfactory for monitoring the quality/ ripeness of fruit and moreover are relatively expensive since they need one or more sensors integrated in the RFID label.

Formisano Fabrizio et al: "Auxiliary smart gas sensor prototype plugged in a RFID active tag for ripening evaluation", 2015 XVIII AISEM Annual Conference, IEEE, 3 February 2015 discloses an RFID device for monitoring the ripeness of a fruit comprising an RFID tag, a reader for said RFID tag capable of detecting, at each reading, a gas sensor signal transmitted by the RFID tag which is correlated with the degree of ripeness of a fruit close to the tag and means for processing data relating to or correlated to the ripeness of the fruit.

Therefore, an object of the present invention is to provide an RFID device and a process using thereof for monitoring the quality/ripeness of fruit, in particular tropical fruit, which are effective and reliable in detecting the actual state of the fruit and which can be realized and implemented at reduced costs, so as to overcome the drawbacks previously mentioned with reference to the prior art.

### Summary of the invention

This and other objects are achieved by an RFID device for monitoring the ripeness of a fruit, the device comprising:
- an RFID label operating in UHF band having a pre-set frequency and/or impedance and/or power value and intended to be directly or indirectly applied to a fruit (4) to be monitored for its ripeness degree,
- a reader of said RFID label capable of detecting, at each reading, a signal transmitted by said RFID label to the reader that is correlated to the frequency and/or impedance and/or power of the RFID label, said transmitted signal having a frequency and/or impedance and/or power correlated or that can be correlated to the ripeness degree of the fruit (4) on which said RFID label is directly or indirectly applied,
- means for processing data relating or correlated to the frequency and/or impedance and/or power of the transmitted signal and/or means for processing data relating or correlated to the variation in frequency and/or impedance and/or power between the transmitted signal and the pre-set frequency and/or impedance and/or power value.

Preferably, the RFID device further comprises display means in communication with the processing means for displaying an information on the ripeness degree or state of the fruit that is correlated to the data processed by the processing means.

According to an embodiment, the RFID device may further comprise a database containing reference data relating or correlated to the detection signal expected by said reader depending on the actual ripeness degree or state of a given fruit, the database being in communication with the processing means and with the display means in order to compare the data relating or correlated to the frequency and/or impedance and/or power of the signal transmitted to said reader and processed by the processing means with the reference data and to obtain a corresponding information response on the ripeness degree or state of the fruit which is displayed by the display means.

The above object is also solved by a process for monitoring the ripeness degree of a fruit, the process comprising the steps of:
- applying an RFID label operating in UHF band directly or indirectly to a fruit, the RFID label having a pre-set base frequency and/or impedance and/or power,
- recording, by means of a reader of said RFID label, a signal transmitted by said RFID label correlated to the frequency and/or impedance and/or power transmitted by said RFID label at predetermined time intervals,
- processing data relating or correlated to the frequency and/or impedance and/or power of the transmitted signal and/or processing data relating or correlated to the frequency and/or impedance and/or power variation between the transmitted signal and the pre-set frequency and/or impedance and/or power value,
- displaying an information on the ripeness degree or state of the fruit correlated to the processed data.

Preferably, the process according to the invention further comprises the steps of:
- comparing the processed data relating or correlated to the frequency and/or impedance and/or power of the signal transmitted to said reader with reference data relating or correlated to the detection signal expected by said reader depending on the actual ripeness degree or state of a given fruit, and
- displaying an information response on the ripeness degree or state of the fruit produced by said comparison.

The RFID label of the device according to the invention may be directly applied on the fruit to be monitored or close thereto. In particular, the RFID label may be applied on a container containing the concerned fruit, with the fruit that may be arranged in contact with the RFID label or close thereto.

Therefore, the present invention also relates to a container or package for fruit containing an RFID label operating in UHF band for use in monitoring the ripeness degree by means of an RFID device of the above type.

Further features and the advantages of the present invention will become clearer from the following description of some preferred embodiments, said description being provided by way of indicative and non-limiting example and with reference to the enclosed drawings in which:

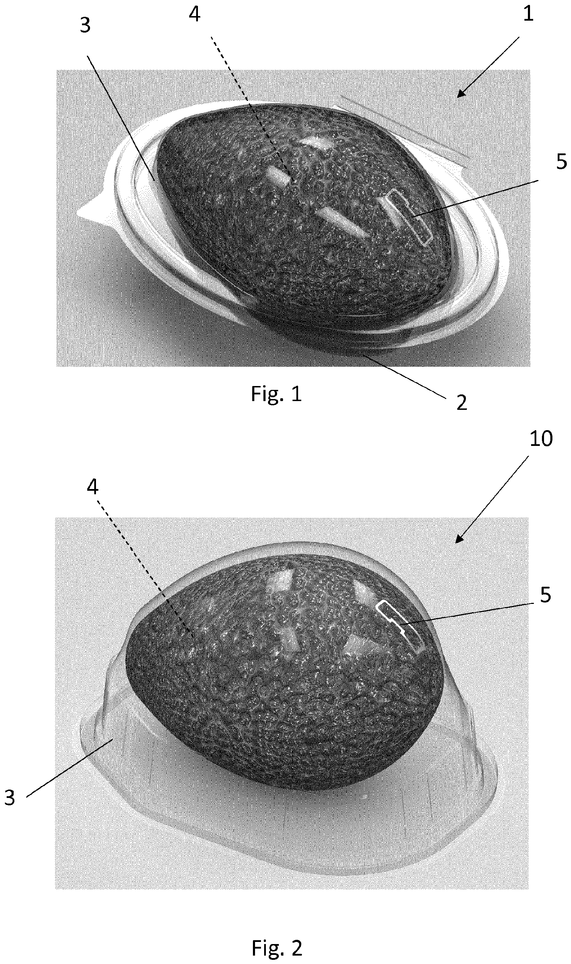

- Figures 1 and 2 show each a container provided with an RFID label suitable for use in monitoring the ripeness degree of a fruit by means of an RFID device according to the invention.

### Detailed description

As previously indicated, the RFID device according to the invention comprises an RFID label operating in UHF band.

The RFID label is by itself conventional and comprises a microchip and an RF antenna mounted on a substrate or support. In use, the substrate or support is used to attach the RFID label directly on the food, for instance a fruit, or close or in contact thereto, in particular by attaching, for instance by means of adhesives, the RFID label on the inner side of a container containing said fruit.

The microchip has a printed circuit comprising an analogical transponder for detecting and decoding an RF reading signal and a decoder-processor for performing the RFID functions and providing an analogical-digital conversion for communicating with the transponder. The printed circuit further comprises a non-volatile memory containing predetermined information which you have access to through the decoder-processor.

Said predetermined information may be for instance information correlated to the application food (fruit) to be monitored, such as type of fruit, origin, price, import and packaging date.

The antenna may be made of a flexible material, in particular a metal material such as copper, aluminum or silver and is operatively connected to the microchip.

As known in the state of the art, the printed circuit may retrieve the data stored by the memory and modulate an RF output signal through the transponder in order to transmit the retrieved data to a reader. In addition to retrieving and transmitting data previously stored in the memory, the RFID label may also allow storing new data in the memory by overwriting them on the previous or additional data with respect to the latter.

The RFID label may also include other discrete electronic components such as capacitors, transistors and diodes, as well as logic elements for controlling the various components of the RFID label.

The RFID label may also include a battery or alternatively may be of the passive type, case in which the antenna is used to provide the RFID circuit with power (activate) through the electromagnetic field provided by a reader device when reading the RFID label.

In the context of the present invention, the RFID label is of the type operating in UHF band (Ultra High Frequency), therefore with a circuit operating at a pre-set frequency in the UHF band. Preferably, the operating frequency is comprised between 600 MHz and 1200 MHz.

In the present invention, the RF reader also operates in UHF band and may read the RFID label and retrieve the data from its memory by emitting an RF reading signal that is compatible with the circuit of the RFID label, so as to "activate" said circuit and produce a response through the transponder which is read and stored by the reader.

The reader may be of the fixed type, for instance a totem, or advantageously of the portable type, for instance a smartphone.

It has been found that the fruits have peculiar dielectric features that change over time in relation to the changes undergone by the fruit as a result of ripening (humidity, acidity, sugars) or to the physiological alterations (consistency) that occur during its storage.

Therefore, by positioning the RFID label directly on the fruit or in contact with or close thereto, the dielectric features specific of the fruit that are correlated to its ripeness degree affect the frequency and/or impedance detected by the antenna and/or power level (or radiation efficiency) when reading the RFID label by the reader device. A response signal from the RFID label is thus obtained, which differs from the expected response signal that can be obtained in the absence of the perturbation of the dielectric environment close to the RFID label determined by the presence of the concerned fruit.

This difference translates into a modified frequency and/or impedance and/or power received and/or transmitted by the RFID label to the reader or, in other terms, into a variation in the frequency and/or impedance and/or power (or radiation efficiency) with respect to the pre-set value correlated or that can be correlated to the ripeness degree of the fruit on which said RFID label is directly or indirectly applied.

According to the present invention, the data relating or correlated to frequency and/or impedance and/or power of the transmitted signal and/or the data relating or correlated to a variation in frequency and/or impedance and/or power between the transmitted signal and the pre-set frequency and/or impedance and/or power value stored by the reader are processed so as to produce an information correlated to the ripeness degree of the fruit that is more readily "readable" and preferably displayable.

In this regard it is possible to use supervised and/or non-supervised classification/learning algorithms that discriminate the various fruit ripeness levels starting from the transmitted signal data.

The processing can be implemented by suitable electronic means/components which use one or more of the above-mentioned algorithms directly present in the fixed reader, such as a totem, or in the portable reader, such as for instance a smartphone. Alternatively, the data detected by the reader may be transmitted and processed by an external electronic device, for instance a computer.

At the end of the processing an information response about the ripeness state of the fruit is obtained, which may be conveniently displayed in a display device, for instance a screen of any electronic device. In particular, the display may be performed by using a screen of the same reader device, for instance the screen of a totem or of a smartphone.

The information may be in the form of any graphic composition (writings, graphics and/or images, etc.) that can be identified by the user, whether a logistics operator or a final consumer, as indicative of the ripeness state of the fruit.

In another embodiment of the invention, the information can be provided in the form of a QR code which is preferably dynamic and shows preferably all the info about traceability and ripening and is able to connect to the web.

According to an embodiment of the present invention, the RFID device comprises a database containing reference data relating or correlated to the detection signal expected by said reader depending on the actual ripeness degree or state of a given fruit, the database being in communication with the processing means and with the display means in order to compare the data relating or correlated to frequency and/or impedance and/or power of the signal transmitted to said reader and processed by the processing means with the reference data and to obtain a corresponding information response on the ripeness degree or state of the fruit which is displayed by the display means.

In particular, the reference data may be classified, for each type of fruit, into ripeness classes of the concerned fruit and the information response obtained after the comparison of the data relating or correlated to frequency and/or impedance and/or power level of the signal transmitted to said reader and processed by the processing means with the reference data may be the association and display of the class corresponding to each reading performed by the RFID reader.

For instance, the reference data may be classified, for each fruit, into three classes respectively corresponding to the circumstance in which the fruit is not yet ripe, is in the suitable/optimal ripeness conditions for consumption or has an altered consistency such as to limit/compromise its consumption, and the information response corresponding to one of these circumstances and displayed by the display means may be that of a fruit belonging to the "unripe", "ripe" or "overripe (creamy)" class, respectively.

Figures 1 and 2 show respective examples of containers provided with RFID label and suitable for use in a system for monitoring the ripeness degree of a fruit according to the invention by means of an RFID device as above described.

Figure 3 shows schematically a system for monitoring the ripeness degree of a fruit according to another embodiment of the present invention.

In Figure 1, the container of the system according to the invention, wholly indicated with reference number 1, is a container of transparent plastic material and suitable for foodstuffs of the type having a bottom 2 and a lid 3 hinged to each other along a respective portion thereof of the peripheral edge. The bottom 2 and the lid 3 define a containment space for containing a fruit 4, for instance an avocado. According to the present invention, the container 1 is provided, on its inner side, with an RFID label 5 operating in UHF band as above described, which may be attached to the container 1 in a conventional manner, for instance by means of adhesives. In the present embodiment, the RFID label 5 is attached on the inner side of the lid 3 since it is close to the fruit 4, but alternatively it may also be attached on the inner side of the bottom 2. The periodical reading of the RDFID label 5 in the above described manner with the use of an RFID device of the invention, which the RFID label belongs to, allows a suitable monitoring of the variation in the ripeness degree of the fruit 4 over time.

Figure 2 shows another container of the system according to the invention, wholly indicated with reference number 10, which is a container of transparent plastic material and suitable for foodstuffs in the form of a lid 3 inside which a containment space for containing a fruit 4, for instance an avocado, is defined and which an RFID label 5 as above described is attached to. In this case as well, the periodical reading of the RFID label 5 as above described with the use of an RFID device of the invention, which the RFID label 5 belongs to, allows a suitable monitoring of the variation in the ripeness degree of the fruit 4 over time.

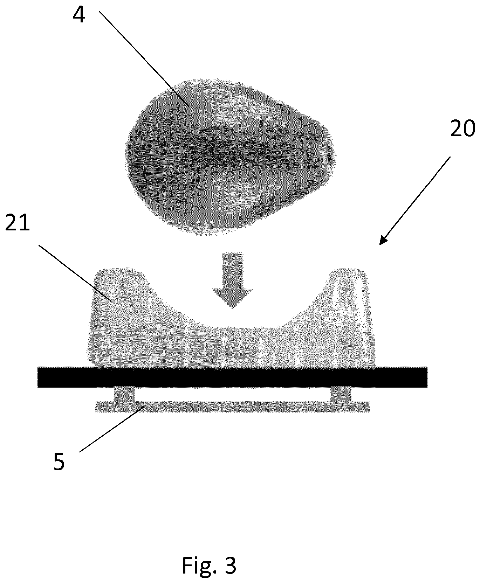

Figure 3 shows schematically a system for monitoring the ripeness degree of a fruit according to another embodiment of the present invention.

The system includes an open container 20 defining a containment cavity 21 on which the fruit 4, for instance an avocado, is placed. The system also includes an RFID device as described above having an RFID label 5 operating in UHF band. In this embodiment, the RFID label 5 is placed below the container 20 in proximity of the cavity 21 at the predetermined short distance thereof. The periodical reading of the RFID label 5 in the above described manner with the use of an RFID device of the invention, which the RFID label belongs to, allows a suitable monitoring of the variation in the ripeness degree of the fruit 4 over time. Advantageously, the reading can be displayed by a led (not shown) placed for example on the cavity 21 of the container 20 which may assume different colors depending on the ripening degree measured by the RFID label 5.

A system as above can be advantageously applied for example for reading the ripeness degree of fruits on a shelf in a warehouse wherein the led associated to each fruit placed in a containment cavity provides a direct and fast indication of the ripeness status of the fruit.

In light of the above, the RFID device according to the invention and the process for using thereof achieve the prefixed objective and have several advantages.

Indeed, it should be noticed that the present invention allows the determination/detection of the ripeness degree of the fruit by means of the RFID technology simply based on the influence that the dielectric properties of the fruit itself - in turn correlated to its ripeness degree - have on the detection of the RFID label antenna located in contact or close to the concerned fruit when the RFID label is activated by the electromagnetic field emitted by an external RFID reader during the reading.

This influence is also reflected in a modified frequency and/or impedance and/or power signal transmitted by the RFID label to the reader which, even in the presence of minor differences, is handled and amplified by the processing means according to the present invention, so as to have data/information that can be readily associated with the ripeness degree of the concerned fruit, as well as that can be readily displayed.

Therefore, the RFID device according to the invention is very effective and reliable and at the same time can be produced at lower costs since the RFID label does not need special detection sensors and expensive analyzers and/or electronic components are not required for its realization. Anyway, the RFID label can also include the presence of sensors for specific needs, for example to further increase the sensitivity and/or use potentialities in detecting the RFID device according to the invention, or to detect other parameters correlated or not correlated to the fruit ripeness.

Furthermore, the RFID device according to the invention provides quick readings of the ripeness degree of the fruit, therefore being particularly convenient and practical in use.

Therefore, the RFID device and the process for using thereof are particularly suitable for use in the distribution chain (storage, transport, sales counter, etc.) in the context of post-harvest monitoring with the aim of preserving the quality of fruit products, in particular tropical fruits, for a longer time, so as to reduce waste and guarantee the placing on the market of fruit at the right ripeness degree.

A skilled person, in order to meet contingent and specific needs, can carry out several changes and variants to the RFID device according to the invention and to the process for using thereof, all included in the scope of protection of the enclosed claims.

## Claims

1. RFID device for monitoring the ripeness degree of a fruit, the device comprising an RFID label (5), a reader of said RFID label and means for processing data relating to or correlated to the ripeness of the fruit, the RFID device being **characterized in that** :
- the RFID label (5) operates in UHF band having a pre-set frequency and/or impedance and/or power value and is intended to be directly or indirectly applied to a fruit (4) to be monitored for its ripeness degree,
- the reader of said RFID label is capable of detecting, at each reading, a signal transmitted by said RFID label to the reader which is correlated to the frequency and/or impedance and/or power of the RFID label (5), said transmitted signal having a frequency and/or impedance and/or power correlated or that can be correlated to the ripeness degree of the fruit (4) on which said RFID label (5) is directly or indirectly applied,
- the means for processing data relating to or correlated to the ripeness of the fruit comprises means for processing data relating or correlated to the frequency and/or impedance and/or power of the transmitted signal and/or means for processing data relating or correlated to the frequency and/or impedance and/or power variation between the transmitted signal and the pre-set frequency and/or impedance and/or power value.

2. RFID device according to claim 1, further comprising display means in communication with the processing means for displaying an information on the ripeness degree or state of the fruit (4) that is correlated to the data processed by the processing means.

3. RFID device according to claim 1 or 2, in which said reader is of the fixed type or a smartphone.

4. RFID device according to any one of the preceding claims, wherein said processing means and/or said display means are arranged in said reader.

5. RFID device according to anyone of the previous claims, further comprising a database containing reference data relating or correlated to the detection signal expected by said reader according to the actual ripeness degree or state of a given fruit, the database being in communication with the processing means and with the display means in order to compare the data relating or correlated to the frequency and/or impedance and/or power of the signal transmitted to said reader and processed by the processing means with the reference data and obtain a corresponding information response on the ripeness degree or state of the fruit which is displayed by the display means.

6. Process for monitoring the ripeness degree of a fruit, the process comprising the steps of:
- applying an RFID label (5) operating in UHF band directly or indirectly to a fruit (4), the RFID label (5) having a pre-set base frequency and/or impedance and/or power,
- recording by means of a reader of said RFID label (5) a signal transmitted by said RFID label (5) correlated to the transmitted frequency and/or impedance and/or to the power of said RFID label (5) at predetermined time intervals,
- processing data relating or correlated to the frequency and/or impedance and/or power of the transmitted signal and/or processing data relating or correlated to the frequency and/or impedance and/or power variation between the transmitted signal and the pre-set frequency and/or impedance and/or power value,
- displaying an information on the ripeness degree or state of the fruit correlated to the processed data.

7. Process according to claim 6, further comprising the steps of:
- comparing the processed data relating or correlated to the frequency and/or impedance and/or power of the signal transmitted to said reader with reference data relating or correlated to the detection signal expected by said reader depending on the actual ripeness degree or state of a given fruit, and
- displaying an information response on the ripeness degree or state of the fruit obtained by said comparison.

8. Process according to claim 6 or 7, wherein said RFID label (5) is attached to said fruit (4) or is attached to a container (1; 10) containing said fruit (4).

9. A system of a container or package (1; 10; 20) for fruit and an RFID device according to anyone of the previous claims 1 to 5.

10. The system according to claim 9, wherein the container or package (1; 10) includes a base (2) and optionally a lid (3) and wherein the RFID label (5) of said RFID device is attached on the inner side of the base (2) or of the lid (3).

11. The system according to claim 9, wherein the RFID label (5) of said RFID device is attached on a fruit inserted in said container or package (1;10).

12. The system according to claim 9, wherein the container (20) defines a containment cavity (21) for a fruit (4) and the RFID device with its RFID label (5) is placed below the container (20) in proximity of the cavity (21), a led being associated with the containment cavity of the container (20), the led being able to assume different colours depending on the ripening degree measured by the RFID label (5).

## Patentansprüche

1. RFID-Vorrichtung zum Überwachen des Reifegrades einer Frucht, wobei die Vorrichtung ein RFID-Etikett (5), ein Lesegerät für das RFID-Etikett und Mittel zum Verarbeiten von Daten umfasst, die sich auf den Reifegrad der Frucht beziehen oder damit korrelieren, wobei die RFID-Vorrichtung **dadurch gekennzeichnet ist, dass**:
- das RFID-Etikett (5) im UHF-Band mit einem voreingestellten Wert einer Frequenz und/oder Impedanz und/oder Leistung arbeitet und dazu bestimmt ist, direkt oder indirekt an einer Frucht (4) angebracht zu werden, deren Reifegrad überwacht werden soll,
- das Lesegerät des RFID-Etiketts in der Lage ist, bei jedem Lesen ein von dem RFID-Etikett an das Lesegerät übertragenes Signal zu erfassen, das mit der Frequenz und/oder Impedanz und/oder Leistung des RFID-Etiketts (5) korreliert ist, wobei das übertragene Signal eine Frequenz und/oder Impedanz und/oder Leistung hat, die mit dem Reifegrad der Frucht (4), auf der das RFID-Etikett (5) direkt oder indirekt angebracht ist, korreliert ist oder korreliert werden kann,
- die Mittel zum Verarbeiten von Daten, die sich auf den Reifegrad der Frucht beziehen oder damit korreliert sind, Mittel zum Verarbeiten von Daten, die sich auf die Frequenz und/oder Impedanz und/oder Leistung des übertragenen Signals beziehen oder damit korreliert sind, und/oder Mittel zum Verarbeiten von Daten umfassen, die sich auf die Frequenz- und/oder Impedanz- und/oder Leistungsabweichung zwischen dem übertragenen Signal und dem voreingestellten Wert der Frequenz und/oder Impedanz und/oder Leistung beziehen oder damit korreliert sind.

2. RFID-Vorrichtung nach Anspruch 1, ferner umfassend Anzeigemittel, die mit den Verarbeitungsmitteln in Verbindung stehen, um eine Information über den Reifegrad oder Zustand der Frucht (4) anzuzeigen, die mit den von den Verarbeitungsmitteln verarbeiteten Daten korreliert ist.

3. RFID-Vorrichtung nach Anspruch 1 oder 2, bei der das Lesegerät vom feststehenden Typ oder ein Smartphone ist.

4. RFID-Vorrichtung nach einem der vorhergehenden Ansprüche, wobei die Verarbeitungsmittel und/oder die Anzeigemittel in dem Lesegerät angeordnet sind.

5. RFID-Vorrichtung nach einem der vorhergehenden Ansprüche, ferner umfassend eine Datenbank, die Referenzdaten enthält, die sich auf das Erfassungssignal beziehen oder damit korreliert sind, das von dem Lesegerät entsprechend dem tatsächlichen Reifegrad oder Zustand einer gegebenen Frucht erwartet wird, wobei die Datenbank mit den Verarbeitungsmitteln und mit den Anzeigemitteln in Verbindung steht, um die Daten, die sich auf die Frequenz und/oder Impedanz und/oder Leistung des an das Lesegerät übertragenen und von den Verarbeitungsmitteln verarbeiteten Signals beziehen oder damit korreliert sind, mit den Referenzdaten zu vergleichen und eine entsprechende Informationsantwort über den Reifegrad oder den Zustand der Frucht zu erhalten, die von den Anzeigemitteln angezeigt wird.

6. Verfahren zur Überwachung des Reifegrades einer Frucht, wobei das Verfahren die folgenden Schritte umfasst:
- Anbringen eines RFID-Etiketts (5), das im UHF-Band arbeitet, direkt oder indirekt an einer Frucht (4), wobei das RFID-Etikett (5) eine voreingestellte Basisfrequenz und/oder Impedanz und/oder Leistung aufweist,
- Aufzeichnen eines von dem RFID-Etikett (5) übertragenen Signals, das mit der übertragenen Frequenz und/oder Impedanz und/oder der Leistung des RFID-Etiketts (5) korreliert ist, mit Hilfe eines Lesegeräts des RFID-Etiketts (5) zu vorgegebenen Zeitintervallen,
- Verarbeiten von Daten, die sich auf die Frequenz und/oder Impedanz und/oder Leistung des übertragenen Signals beziehen oder damit korreliert sind, und/oder Verarbeiten von Daten, die sich auf die Frequenz- und/oder Impedanz- und/oder Leistungsabweichung zwischen dem übertragenen Signal und dem voreingestellten Wert der Frequenz und/oder Impedanz und/oder Leistung beziehen oder damit korreliert sind,
- Anzeigen einer Information über den Reifegrad oder Zustand der Frucht, die mit den verarbeiteten Daten korreliert ist.

7. Verfahren nach Anspruch 6, ferner umfassend die Schritte:
- Vergleichen der verarbeiteten Daten, die sich auf die Frequenz und/oder Impedanz und/oder Leistung des an das Lesegerät übertragenen Signals beziehen oder damit korreliert sind, mit Referenzdaten, die sich auf das Erfassungssignal beziehen oder damit korreliert sind, das von dem Lesegerät in Abhängigkeit von dem tatsächlichen Reifegrad oder Zustand einer gegebenen Frucht erwartet wird, und
- Anzeigen einer Informationsantwort über den Reifegrad oder Zustand der Frucht, die durch den Vergleich erhalten wurde.

8. Verfahren nach Anspruch 6 oder 7, wobei das RFID-Etikett (5) an der Frucht (4) angebracht ist oder an einem die Frucht (4) enthaltenden Behälter (1; 10) angebracht ist.

9. System aus einem Behälter oder einer Verpackung (1; 10; 20) für Früchte und einer RFID-Vorrichtung nach einem der vorhergehenden Ansprüche 1 bis 5.

10. System nach Anspruch 9, wobei der Behälter oder die Verpackung (1; 10) einen Boden (2) und optional einen Deckel (3) aufweist und wobei das RFID-Etikett (5) der RFID-Vorrichtung an der Innenseite des Bodens (2) oder des Deckels (3) angebracht ist.

11. System nach Anspruch 9, wobei das RFID-Etikett (5) der RFID-Vorrichtung an einer in den Behälter oder die Verpackung (1; 10) eingelegten Frucht angebracht ist.

12. System nach Anspruch 9, wobei der Behälter (20) einen Aufnahmehohlraum (21) für eine Frucht (4) definiert und die RFID-Vorrichtung mit ihrem RFID-Etikett (5) unterhalb des Behälters (20) in der Nähe des Hohlraums (21) angeordnet ist, wobei dem Aufnahmehohlraum des Behälters (20) eine LED zugeordnet ist, die je nach dem gemessenen Reifegrad unterschiedliche Farben annehmen kann.

## Revendications

1. Dispositif RFID pour surveiller le degré de maturité d'un fruit, ce dispositif comprenant une étiquette RFID (5), un lecteur de ladite étiquette RFID et des moyens pour traiter les données relatives ou corrélées à la maturité du fruit, ce dispositif RFID étant **caractérisé en ce que**
- l'étiquette RFID (5) fonctionne sur la bande UHF ayant une valeur de fréquence et/ou d'impédance et/ou de puissance prédéfinie et est destinée à être appliquée directement ou indirectement sur un fruit (4) dont le degré de maturité doit être surveillé,
- le lecteur de ladite étiquette RFID est capable de détecter à chaque lecture un signal transmis par ladite étiquette RFID au lecteur qui est corrélé à la fréquence et/ou à l'impédance et/ou à la puissance de l'étiquette RFID (5), ledit signal transmis ayant une fréquence et/ou une impédance et/ou une puissance corrélées ou qui peuvent être corrélées au degré de maturité du fruit (4) sur lequel ladite étiquette (5) est appliquée directement ou indirectement,
- les moyens pour traiter les données relatives ou corrélées à la maturité du fruit comprennent des moyens pour traiter des données relatives ou corrélées à la fréquence et/ou à l'impédance et/ou à la puissance du signal transmis et/ou des moyens pour traiter des données relatives ou corrélées à la variation de fréquence et/ou d'impédance et/ou de puissance entre le signal transmis et la valeur de fréquence et/ou d'impédance et/ou de puissance prédéfinie.

2. Dispositif RFID selon la revendication 1, comprenant en outre des moyens d'affichage en communication avec les moyens de traitement pour afficher une information sur le degré de maturité ou l'état du fruit (4) qui est corrélée aux données traitées par les moyens de traitement.

3. Dispositif RFID selon la revendication 1 ou 2, dans lequel ledit lecteur est de type fixe ou un smartphone.

4. Dispositif RFID selon l'une quelconque des revendications précédentes, dans lequel lesdits moyens de traitement et/ou lesdits moyens d'affichage sont agencés dans ledit lecteur.

5. Dispositif RFID selon l'une quelconque des revendications précédentes, comprenant en outre une base de données contenant des données de référence relatives ou corrélées au signal de détection attendu par ledit lecteur selon le degré de maturité ou l'état effectif d'un fruit donné, la base de données étant en communication avec les moyens de traitement et avec les moyens d'affichage afin de comparer les données relatives ou corrélées à la fréquence et/ou à l'impédance et/ou à la puissance du signal transmis audit lecteur et traité par les moyens de traitement avec les données de référence et d'obtenir en réponse une information correspondante sur le degré de maturité ou l'état du fruit qui est affichée par les moyens d'affichage.

6. Procédé pour surveiller le degré de maturité d'un fruit, ce procédé comprenant les étapes suivantes :
- application d'une étiquette RFID (5) fonctionnant sur la bande UHF directement ou indirectement sur un fruit (4), cette étiquette RFID (5) ayant une fréquence et/ou une impédance et/ou une puissance de base prédéfinie,
- enregistrement au moyen d'un lecteur de ladite étiquette RFID (5) d'un signal transmis par ladite étiquette RFID (5) corrélé à la fréquence et/ou à l'impédance et/ou à la puissance transmises de ladite étiquette RFID (5) à intervalles temporels prédéterminés,
- traitement de données relatives ou corrélées à la fréquence et/ou à l'impédance et/ou à la puissance du signal transmis et/ou traitement de données relatives ou corrélées à la variation de fréquence et/ou d'impédance et/ou de puissance entre le signal transmis et la valeur de fréquence et/ou d'impédance et/ou de puissance prédéfinie et
- affichage d'une information sur le degré de maturité ou l'état du fruit corrélée aux données traitées.

7. Procédé selon la revendication 6, comprenant en outre les étapes suivantes :
- comparaison des données traitées relatives ou corrélées à la fréquence et/ou à l'impédance et/ou à la puissance du signal transmis audit lecteur avec des données de référence relatives ou corrélées au signal de détection attendu par ledit lecteur selon le degré de maturité ou l'état effectif d'un fruit donné et
- affichage en réponse d'une information sur le degré de maturité ou l'état du fruit obtenue par ladite comparaison.

8. Procédé selon la revendication 6 ou 7, dans lequel ladite étiquette RFID (5) est fixée audit fruit (4) ou est fixée à un récipient (1, 10) contenant ledit fruit (4).

9. Système composé d'un contenant ou d'en emballage (1, 10, 20) pour fruit et d'un dispositif RFID selon l'une quelconque des revendications précédentes 1 à 5.

10. Système selon la revendication 9, dans lequel le contenant ou l'emballage (1, 10) comprend un fond (2) et facultativement un couvercle (3) et dans lequel l'étiquette RFID (5) dudit dispositif RFID est fixée sur la face intérieure du fond (2) ou du couvercle (3).

11. Système selon la revendication 9, dans lequel l'étiquette RFID (5) dudit dispositif RFID est fixée sur un fruit inséré dans ledit contenant ou emballage (1, 10).

12. Système selon la revendication 9, dans lequel le contenant (20) définit une cavité de retenue (21) pour un fruit (4) et le dispositif RFID avec son étiquette RFID (5) est placé sous le contenant (20) à proximité de la cavité (21), une DEL étant associée à la cavité de retenue du contenant (20), la DEL étant capable d'adopter différentes couleurs selon le degré de maturité mesuré par l'étiquette RFID (5).
